# EUROPEAN PATENT APPLICATION

(11) **EP 4 443 165 A1**
(43) Date of publication of application: **09.10.2024**
(21) Application number: 22901025.1
(22) Date of filing: 07.11.2022
(51) Int. Cl.: G01N 35/00, G01N 35/10

(54) **AUTOMATED ANALYSIS DEVICE**

(30) Priority: 30.11.2021 JP 2021193980
(71) Applicant: HITACHI HIGH-TECH CORPORATION, Tokyo 105-6409 (JP)
(72) Inventor: NODA Kazuhiro, Tokyo 100-8280 (JP); TAKADA Eiichiro, Tokyo 105-6409 (JP); HAMASAKI Koshin, Tokyo 105-6409 (JP); NISHIGAKI Kenichi, Tokyo 105-6409 (JP)
(74) Representative: MERH-IP Matias Erny Reichl Hoffmann Patentanwälte PartG mbB
(86) International application number: PCT/JP2022/041323
(87) International publication number: WO 2023/100592

(57) **Abstract**

The present invention provides an automated analysis device capable of detecting whether or not a plurality of fluid control valves included in the automated analysis device operate normally at low cost. The automated analysis device according to the present invention includes a plurality of fluid control valves placed in a flow path, a pressure sensor (112) which measures pressure in the flow path, a liquid level detection element (103c) which detects a position of a liquid level of a liquid discharged by a discharge nozzle (120, 124), and a control unit (100). One or more of the fluid control valves act as a first fluid control valve (108, 110) connected to the pressure sensor (112) through the flow path. One or more of the fluid control valves act as a second fluid control valve (115, 118, 123) connected to the discharge nozzle (120, 124) through the flow path. The control unit (100) detects whether the first fluid control valve (108, 110) has normally operated based on the pressure value measured by the pressure sensor (112), and detects whether the second fluid control valve (115, 118, 123) has normally operated based on the position of the liquid level detected by the liquid level detection element (103c).

## Description

### Technical Field

The present invention relates to an automated analysis device including a fluid control valve.

### Background Art

An automated analysis device such as a clinical chemistry analyzer or an immunoassay analyzer includes a pipetting unit that aspirates a specified amount of a sample and a reagent and discharges the sample and the reagent into a reaction container, and a detection unit that analyzes a reacted solution.

The pipetting unit and the detection unit include a flow path for aspirating or discharging a sample or a reagent. The inside of the flow path is filled with a liquid (cleaning liquid) for performing cleaning or a reagent (system reagent) mounted on the automated analysis device. The cleaning liquid and the system reagent are fed from a dedicated tank or bottle to the flow path by a dedicated pump.

The automated analysis device includes a fluid control valve that switches between opening and closing of a flow path in order to control start and stop of liquid feeding of the cleaning liquid or the system reagent. By using the fluid control valve, it is possible to perform control to feed liquid only to a specific flow path and not to feed liquid to other flow paths.

In order to ensure the reliability of the automated analysis device, it is important to confirm that the operation of the component is normally performed. The operation of the automated analysis device and the reliability of the analysis result can be enhanced by confirming that the operation of the fluid control valve is normally performed.

An example of devices for confirming that the operation of the fluid control valve is normally performed is described in PTL 1 and PTL 2. The system described in PTL 1 includes a pressure sensor between a solenoid valve and a check valve, compares an output of the pressure sensor with a threshold, and outputs an alarm signal. The fluid control valve described in PTL 2 includes a vibration sensor that detects vibration caused by a water hammer phenomenon, and is determined to be normal when vibration equal to or greater than a threshold is detected.

### Citation List

### Patent Literature

PTL 1: JP 2010-217147 A
PTL 2: JP 2018-003912 A

### Summary of Invention

### Technical Problem

In the conventional techniques such as the devices described in PTL 1 and PTL 2, only a specific flow path control valve placed in a flow path to which a specific sensor such as a pressure sensor or a vibration sensor is connected can be monitored, and only some valves among a large number of fluid control valves provided in the automated analysis device are monitored. Therefore, in order to monitor many of the fluid control valves provided in the automated analysis device, it is necessary to increase the number of sensors, and there is a problem that the cost for monitoring increases.

An object of the present invention is to provide an automated analysis device capable of detecting whether or not a plurality of fluid control valves included in the automated analysis device operate normally at low cost.

### Solution to Problem

An automated analysis device according to the present invention includes a flow path which feeds liquid, a plurality of fluid control valves which are placed in the flow path and switch between opening and closing of the flow path, a pressure sensor which measures pressure in the flow path, a liquid level detection element which detects a position of a liquid level of the liquid, and a control unit. One or more of the fluid control valves act as a first fluid control valve connected to the pressure sensor through the flow path. One or more of the fluid control valves act as a second fluid control valve connected to a discharge nozzle through the flow path. The liquid level detection element detects a position of a liquid level of the liquid discharged from the discharge nozzle. The control unit detects whether or not the first fluid control valve has normally operated based on a value of the pressure measured by the pressure sensor, and detects whether or not the second fluid control valve has normally operated based on the position of the liquid level detected by the liquid level detection element.

### Advantageous Effects of Invention

According to the present invention, it is possible to provide an automated analysis device capable of detecting whether or not a plurality of fluid control valves included in the automated analysis device normally operate at low cost.

### Brief Description of Drawings

[FIG. 1] FIG. 1 is a schematic configuration diagram of an automated analysis device according to a first embodiment of the present invention.
[FIG. 2] FIG. 2 is a flowchart illustrating a procedure for detecting that a solenoid valve has normally operated.
[FIG. 3] FIG. 3 is a diagram illustrating an example of a pressure value acquired in the processing from S201 to S204 in FIG. 2.
[FIG. 4] FIG. 4 is a flowchart illustrating a procedure for detecting that a solenoid valve has normally operated.
[FIG. 5] FIG. 5 is a diagram illustrating an example of a pressure value acquired in the processing from S401 to S406 in FIG. 4.
[FIG. 6] FIG. 6 is a flowchart illustrating a procedure for detecting that a solenoid valve has normally operated.
[FIG. 7] FIG. 7 is a flowchart illustrating a procedure for detecting that a solenoid valve has normally operated.
[FIG. 8] FIG. 8 is a flowchart illustrating a procedure for detecting that a solenoid valve has normally operated.
[FIG. 9] FIG. 9 is a flowchart illustrating a procedure for detecting that a solenoid valve has normally operated.
[FIG. 10] FIG. 10 is a flowchart illustrating an example of a method of determining which information should be used to determine whether or not the solenoid valve has normally operated.
[FIG. 11] FIG. 11 is a flowchart illustrating an example of a method for determining a timing of performing a procedure for determining whether or not the solenoid valve has normally operated.
[FIG. 12] FIG. 12 is a flowchart illustrating a procedure for detecting that the solenoid valve has normally operated and that the pressure of the pump is normal in the automated analysis device according to a second embodiment of the present invention.

### Description of Embodiments

The automated analysis device according to the present invention can detect whether or not a plurality of fluid control valves included in the automated analysis device normally operate by using a detection element provided in advance in the automated analysis device. The detection element provided in advance is, for example, a pressure sensor that measures the pressure in the flow path or a liquid level detection element that detects the position of the liquid level of the liquid. In the present invention, it is possible to detect whether or not the fluid control valve normally operates by using a detection element provided in advance according to the fluid control valve for which whether or not the operation is normal is to be detected. In addition, in the present invention, since it is not necessary to additionally attach a detection element in order to check the operation of the fluid control valve, it is possible to detect whether or not the fluid control valve normally operates at low cost.

Hereinafter, an automated analysis device according to an embodiment of the present invention will be described with reference to the drawings. In the following embodiment, as an example, a configuration in which an automated analysis device includes a pipetting unit which aspirates a specified amount of a sample and a reagent and discharges the sample and the reagent into a reaction container, and a detection unit which analyzes a mixed solution (reaction liquid) of the sample and the reagent will be described. In the following embodiments, it is assumed that the fluid control valve is formed by a solenoid valve.

### First embodiment

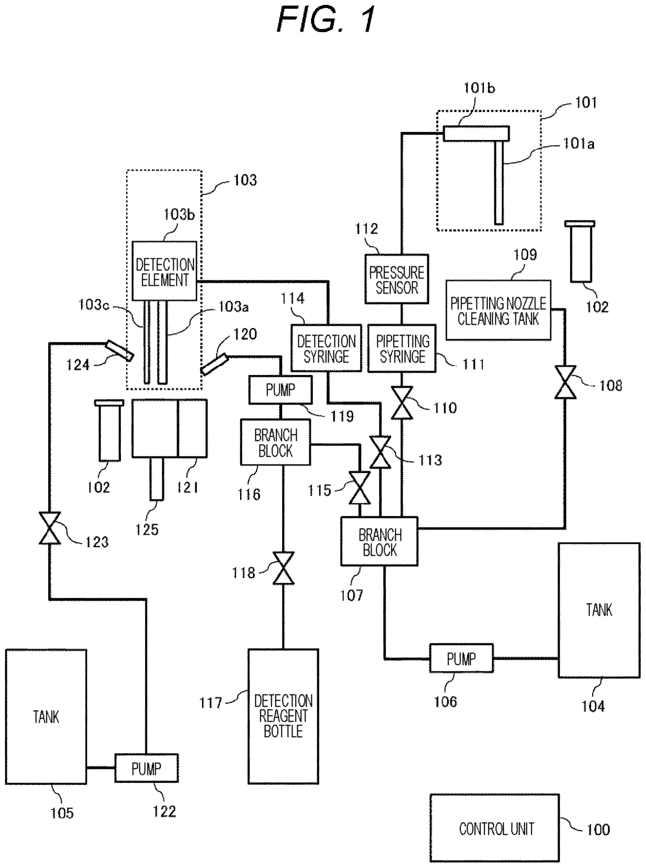

FIG. 1 is a schematic configuration diagram of an automated analysis device according to a first embodiment of the present invention. The automated analysis device according to the present embodiment includes a pipetting unit 101, a detection unit 103, a control unit 100, a flow path for feeding liquid, and a plurality of solenoid valves (fluid control valves) placed in the flow path. The control unit 100 controls the entire automated analysis device. The fluid control valve switches between opening and closing of the flow path.

The pipetting unit 101 includes a pipetting nozzle 101a and a pipetting arm 101b, and aspirates a specified amount of a sample and a reagent using the pipetting nozzle 101a. The sample and the reagent aspirated by the pipetting unit 101 are discharged into a reaction container 102 and mixed. Hereinafter, the mixed solution of the sample and the reagent is referred to as a reaction liquid. The reaction container 102 containing the reaction liquid is conveyed to the detection unit 103 after the temperature is adjusted for a certain period of time.

The detection unit 103 includes a reaction liquid aspiration nozzle 103a, a detection element 103b, and a liquid level detection element 103c, and aspirates the reaction liquid in the reaction container 102 using the reaction liquid aspiration nozzle 103a. The aspirated reaction liquid is fed into the detection element 103b. The detection unit 103 analyzes the reaction liquid with the detection element 103b, and detects, for example, absorbance and an amount of emission as an analysis result of the reaction liquid.

The detection element 103b detects characteristics of the reaction liquid and quantifies a predetermined component amount (for example, the concentration of a predetermined component contained in the reaction liquid) in the reaction liquid. A specific example of the configurations of the detection element 103b includes a combination of a light source and a photometer, and a combination of an electrode and a photodetection element. The detection element 103b including a light source and a photometer detects absorbance as a characteristic of the reaction liquid. The detection element 103b including an electrode and a photodetection element detects a light emission amount as a characteristic of the reaction liquid.

The liquid level detection element 103c can detect the position of the liquid level of the liquid, and detects that the reaction liquid aspiration nozzle 103a is immersed in the liquid such as the reaction liquid and separated from the liquid.

The automated analysis device includes a tank 104 storing a cleaning liquid for cleaning. The cleaning liquid contained in the tank 104 is pure water, a solution containing a surfactant, or the like, and is used for cleaning to prevent the liquid remaining in the pipetting unit 101 or the detection unit 103 from being carried over to the next analysis. The flow path from the tank 104 is connected to a branch block 107. The cleaning liquid contained in the tank 104 is fed to the branch block 107 using a pump 106.

On the downstream side of the branch block 107, there are a plurality of flow paths branched from the branch block 107. A plurality of solenoid valves 108, 110, 113, and 115 for switching between opening and closing of the flow paths are placed in the plurality of flow paths . The solenoid valves 108, 110, 113, and 115 control start and stop of feeding of the cleaning liquid to the respective flow paths.

A flow path branching from the branch block 107 to the solenoid valve 108 is connected to the pipetting nozzle cleaning tank 109. In the pipetting nozzle cleaning tank 109, the pipetting nozzle 101a is cleaned by discharging the cleaning liquid fed from the tank 104. This cleaning liquid is discharged from the pipetting nozzle cleaning tank 109 to the outer wall of the pipetting nozzle 101a to wash away the sample or the reagent component, in order to prevent the sample or the reagent component from being carried over to the next analysis. The solenoid valve 108 switches between opening and closing of the flow path connecting the pipetting nozzle cleaning tank 109 and the branch block 107 to control start and stop of feeding of the cleaning liquid to the flow path.

A flow path branching from the branch block 107 to the solenoid valve 110 is connected to the pipetting nozzle 101a. A pipetting syringe 111 and a pressure sensor 112 are connected to the flow path between the solenoid valve 110 and the pipetting nozzle 101a. The pipetting syringe 111 has a function of aspirating and discharging a specified amount of the sample and the reagent. The pressure sensor 112 has a function of measuring the pressure in the flow path and checking that no clot occurs in the flow path and that there is no abnormality in aspiration and discharge of the sample and the reagent. An example of abnormalities in aspiration and discharge of the sample and the reagent includes high viscosity of the sample, clot of the flow path by the fibrin in the sample, and aspiration of bubbles on the liquid surface.

By filling the flow path connected to the pipetting nozzle 101a with the cleaning liquid, responsiveness to the aspiration/discharge operation of the pipetting syringe 111 can be enhanced. Further, by discharging the cleaning liquid from the tip of the pipetting nozzle 101a, the inner wall of the pipetting nozzle 101a can be cleaned.

A flow path branching from the branch block 107 to the solenoid valve 113 is connected to the detection element 103b. A detection syringe 114 is connected to the flow path connecting the solenoid valve 113 and the detection element 103b. The detection syringe 114 is placed between the solenoid valve 113 and the detection element 103b, and has a function of aspirating a reaction liquid or a reagent (detection reagent) used for analysis of the reaction liquid and feeding the reaction liquid or the reagent to the detection element 103b of the detection unit 103. By filling the flow path connected to the detection element 103b with the cleaning liquid, responsiveness to the operation of the detection syringe 114 can be enhanced.

A flow path branching from the branch block 107 to the solenoid valve 115 is connected to the branch block 116.

The automated analysis device includes a detection reagent bottle 117 containing a detection reagent. The flow path from the detection reagent bottle 117 is connected to the branch block 116.

A solenoid valve 118 is placed in a flow path connecting the detection reagent bottle 117 and the branch block 116. The solenoid valve 118 switches between opening and closing of a flow path connecting the detection reagent bottle 117 and the branch block 116, and controls start and stop of feeding liquid to the flow path.

A pump 119 is placed on the downstream side of the branch block 116. A discharge nozzle 120 is placed on the downstream side of the pump 119. The discharge nozzle 120 is connected to the solenoid valve 115 and the solenoid valve 118 through a flow path.

By controlling the opening and closing of the solenoid valve 115 and the solenoid valve 118, the cleaning liquid in the tank 104 or the detection reagent in the detection reagent bottle 117 is fed to the pump 119. Using the pump 119, the discharge nozzle 120 can discharge a cleaning liquid or a detection reagent into a reagent cup 121. The reagent cup 121 is a container in which the liquid level detection element 103c can detect the position of the liquid level of the liquid. The cleaning liquid is used for cleaning the reagent cup 121 and cleaning the detection element 103b. The detection reagent is used for conditioning the surface of the detection element 103b and cleaning the detection element 103b.

The detection syringe 114 aspirates the reaction liquid from the reaction container 102 by the reaction liquid aspiration nozzle 103a, and feeds the aspirated reaction liquid to the detection element 103b. The detection syringe 114 aspirates the cleaning liquid or the detection reagent discharged from the discharge nozzle 120 into the reagent cup 121 from the reagent cup 121 by the reaction liquid aspiration nozzle 103a, and feeds the aspirated detection reagent to the detection element 103b.

The automated analysis device includes a tank 105 storing a cleaning liquid for cleaning. The cleaning liquid contained in the tank 105 is the same liquid as the cleaning liquid contained in the tank 104. The flow path from the tank 105 is connected to a discharge nozzle 124. A pump 122 and a solenoid valve 123 are placed in a flow path connecting the tank 105 and the discharge nozzle 124. That is, the solenoid valve 123 is connected to the discharge nozzle 124 through the flow path. The cleaning liquid contained in the tank 105 is fed to the discharge nozzle 124 via the solenoid valve 123 using the pump 122.

The discharge nozzle 124 discharges the cleaning liquid to a cleaning tank 125. When the discharge nozzle 124 discharges the cleaning liquid to the reaction liquid aspiration nozzle 103a inserted in the cleaning tank 125, the reaction liquid adhering to the outer wall of the reaction liquid aspiration nozzle 103a can be washed away.

As described above, the automated analysis device according to the present embodiment includes the solenoid valve 110, the solenoid valve 108, the solenoid valve 118, the solenoid valve 115, the solenoid valve 123, and the solenoid valve 113 as fluid control valves for switching between opening and closing of the flow path. The solenoid valve 110, the solenoid valve 108, the solenoid valve 118, the solenoid valve 115, and the solenoid valve 113 are connected to the pressure sensor 112 through a flow path. The solenoid valve 118 and the solenoid valve 115 are connected to the discharge nozzle 120 through a flow path. The solenoid valve 123 is connected to the discharge nozzle 124 through a flow path.

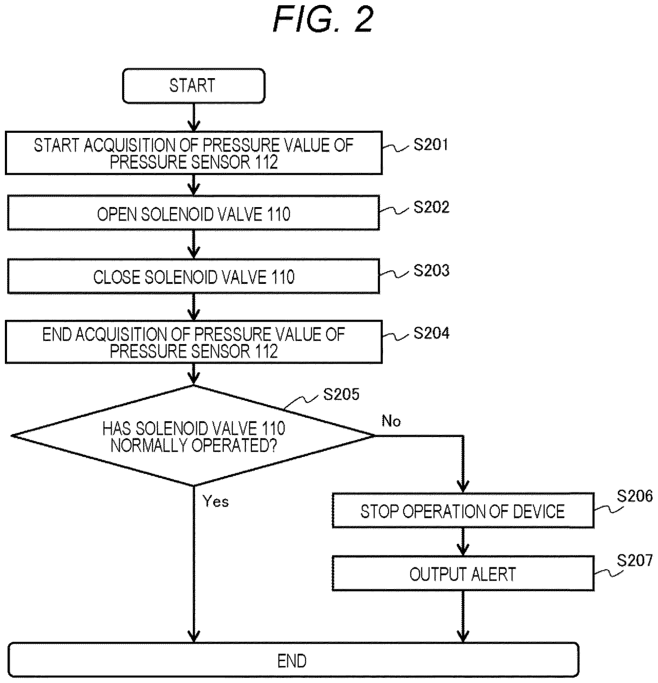

Hereinafter, a configuration for detecting whether or not these solenoid valves operate normally in the automated analysis device according to the present embodiment will be described. Note that the processing of the flowcharts illustrated in FIGS. 2 to 9 described below is executed by the control unit 100 unless otherwise specified.

### <Solenoid valve 110>

First, a configuration for detecting that the solenoid valve 110 has normally operated in the automated analysis device according to the present embodiment will be described.

FIG. 2 is a flowchart illustrating a procedure for detecting that the solenoid valve 110 has normally operated. As illustrated in FIG. 1, the solenoid valve 110 is placed in a flow path connecting the branch block 107 and a pipetting nozzle 101a. In the flow path connecting the solenoid valve 110 and the pipetting nozzle 101a, the pressure sensor 112 is placed between the solenoid valve 110 and the pipetting nozzle 101a. That is, the pressure sensor 112 is placed in the flow path in which the solenoid valve 110 is placed. Therefore, the control unit 100 can detect whether or not the solenoid valve 110 normally operates based on the pressure value measured by the pressure sensor 112.

In S201, acquisition of the pressure value measured by the pressure sensor 112 is started.

In S202, the solenoid valve 110 is opened. When the solenoid valve 110 is opened, feeding of the cleaning liquid to the flow path is started.

In S203, the solenoid valve 110 is opened for a predetermined constant time, and then the solenoid valve 110 is closed.

In S204, the acquisition of the pressure value measured by the pressure sensor 112 ends.

In S205, it is determined whether or not the solenoid valve 110 has normally operated based on the acquired pressure value. In a case where the solenoid valve 110 has normally operated, the processing of the flowchart of FIG. 2 ends.

S206 and S207 are processing when the solenoid valve 110 has not normally operated. In S206, the operation of the automated analysis device is stopped. In S207, an alert indicating that the solenoid valve 110 is not operating normally is output.

An example of a specific determination criterion when the control unit 100 determines whether or not the solenoid valve 110 has normally operated in S205 will be described below.

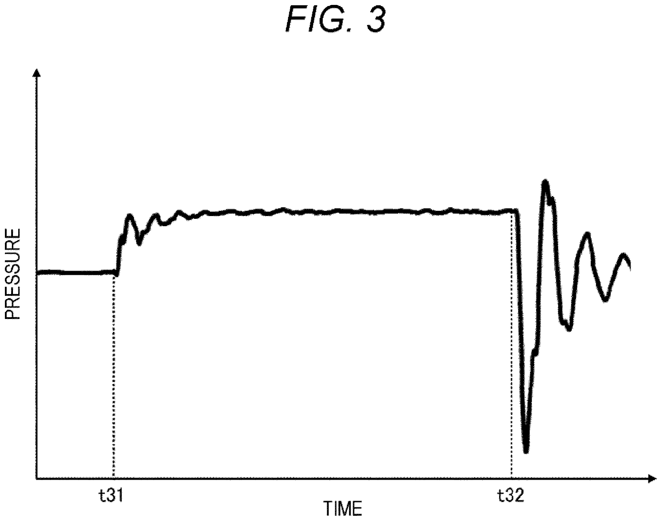

FIG. 3 is a diagram illustrating an example of the pressure value acquired in the processing from S201 to S204 in FIG. 2. In FIG. 3, time t31 is the time when the solenoid valve 110 is opened, and time t32 is the time when the solenoid valve 110 is closed.

Immediately after the time t31 when the solenoid valve 110 is opened, the pressure value measured by the pressure sensor 112 increases. At this time, pressure pulsation occurs due to a water hammer caused by the opening operation of the solenoid valve 110. Immediately after the time t32 when the solenoid valve 110 is closed, the pressure value measured by the pressure sensor 112 decreases. At this time, pressure pulsation occurs due to a water hammer caused by the closing operation of the solenoid valve 110.

The water hammer immediately after the time t32 does not occur unless both the operation of opening and the operation of closing the solenoid valve 110 are successful. Therefore, it can be determined that the solenoid valve 110 has normally operated in a case where the amplitude of the pressure change due to the water hammer immediately after the time t32 is greater than or equal to a predetermined constant value.

In addition, in a case where the pressure between the time t31 and the time t32 is higher than the pressure before the time t31 and the pressure after the time t32, it can be determined that the solenoid valve 110 normally operates. In addition, it is also possible to determine whether or not the solenoid valve 110 has normally operated only by the pressure value when the solenoid valve 110 is closed, or determine whether or not the solenoid valve 110 has normally operated only by the pressure value after the solenoid valve 110 is closed.

In the flowchart illustrated in FIG. 2, the control unit 100 acquires a pressure value from before the solenoid valve 110 is opened to after the solenoid valve is closed. In a case where it can be determined whether or not the solenoid valve 110 has normally operated only by the pressure value (change in pressure value) when the solenoid valve 110 is closed (S203), the procedures of S201 and S202 can be exchanged. That is, the control unit 100 can start acquisition of the pressure value measured by the pressure sensor 112 after opening the solenoid valve 110 and before closing the solenoid valve 110 (between S202 and S203) .

In a case where it is possible to determine whether or not the solenoid valve 110 has normally operated only by the pressure value after closing the solenoid valve 110, the procedure of S201 can be set to a procedure after S203. That is, the control unit 100 can start acquisition of the pressure value measured by the pressure sensor 112 after closing the solenoid valve 110.

As described above, in a case where the time for acquiring the pressure value is shortened by changing the timing for starting the acquisition of the pressure value, the time required for processing the pressure data can be shortened.

In the flowchart shown in FIG. 2, in a case where the solenoid valve 110 has not normally operated, the control unit 100 executes processing of stopping the operation of the automated analysis device (S206). The content of the processing in S206 is desirably determined in consideration of the risk when the solenoid valve 110 fails.

For example, in a case where it is considered that a failure of the solenoid valve 110 causes a serious influence on the automated analysis device due to a water leak from the pipetting nozzle 101a or the like, it is desirable to move the pipetting nozzle 101a to the pipetting nozzle cleaning tank 109, reduce the risk of the water leak, and then stop the operation of the automated analysis device in S206. At this time, the operation of the pump 106 is desirably stopped at timing as early as possible. In addition, in a case where it is considered that the pipetting operation related to the analysis cannot be normally performed although a serious influence such as water leakage does not occur, it is also possible to perform processing of stopping the subsequent pipetting operation and continuing only the analysis of the sample obtained by the previous pipetting operation in S206.

### <Solenoid valve 108>

Next, a configuration for detecting that the solenoid valve 108 has normally operated in the automated analysis device according to the present embodiment will be described. As illustrated in FIG. 1, the solenoid valve 108 is placed in a flow path connecting a pipetting nozzle cleaning tank 109 and the branch block 107.

The flow path in which the solenoid valve 108 is placed is a flow path in which the flow rate when the solenoid valve 108 is opened is larger than a predetermined value. Specifically, the flow path in which the solenoid valve 108 is placed (the flow path connecting the pipetting nozzle cleaning tank 109 and the branch block 107) has a larger flow rate than the flow rate in the flow path in which the solenoid valve 115 is placed (the flow path connecting the branch block 107 and the branch block 116) and the flow rate in the flow path in which the solenoid valve 113 is placed (the flow path connecting the branch block 107 and a detection syringe 114) when the solenoid valves 108, 115, and 113 placed in the respective flow paths are opened.

The flow path in which the solenoid valve 108 is placed is a flow path having a flow rate large enough to affect the flow rate of the flow path in which the pressure sensor 112 is placed (the flow path that connects the branch block 107 and the pipetting nozzle 101a and in which the solenoid valve 110 is placed) . The change in pressure when the solenoid valve 108 is opened is large, and the pressure sensor 112 can easily measure the change in pressure due to the opening of the solenoid valve 108. Therefore, the control unit 100 can detect whether or not the solenoid valve 108 has normally operated based on the pressure value measured by the pressure sensor 112 by opening and closing the solenoid valve 110 in a state where the solenoid valve 108 is opened.

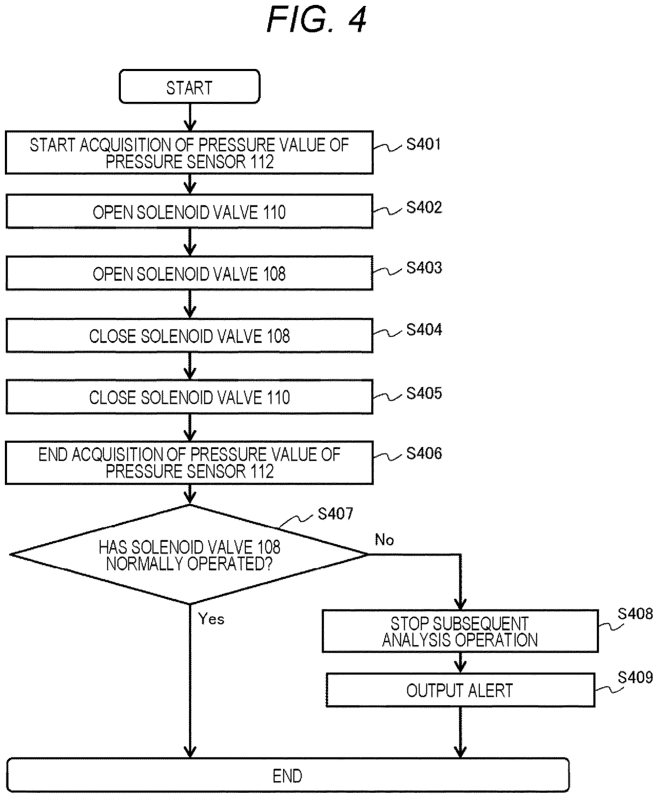

FIG. 4 is a flowchart illustrating a procedure for detecting that the solenoid valve 108 has normally operated.

In S401, acquisition of the pressure value measured by the pressure sensor 112 is started.

In S402, the solenoid valve 110 is opened.

In S403, the solenoid valve 108 is opened. In a case where the solenoid valve 108 is opened, the flow rate of the flow path in which the pressure sensor 112 is placed (the flow path in which the solenoid valve 110 is placed) greatly changes.

In S404, the solenoid valve 108 is opened for a predetermined constant time, and then the solenoid valve 108 is closed.

In S405, the solenoid valve 110 is opened for a predetermined constant time, and then the solenoid valve 110 is closed.

In S406, the acquisition of the pressure value measured by the pressure sensor 112 ends.

In S407, it is determined whether or not the solenoid valve 108 has normally operated based on the acquired pressure value. In a case where the solenoid valve 108 has normally operated, the processing of the flowchart of FIG. 4 ends.

S408 and S409 are processing when the solenoid valve 108 has not normally operated. In S408, the subsequent analysis operation of the automated analysis device is stopped. In S409, an alert indicating that the solenoid valve 108 is not operating normally is output.

An example of a specific determination criterion when the control unit 100 determines whether or not the solenoid valve 108 has normally operated in S407 will be described below.

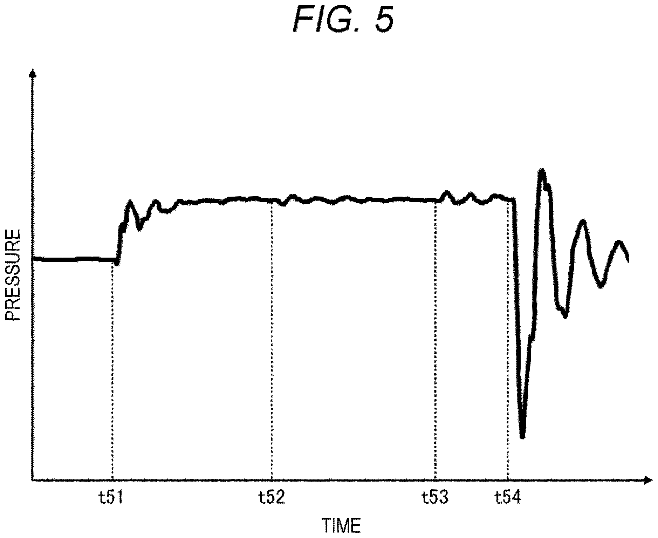

FIG. 5 is a diagram illustrating an example of the pressure value acquired in the processing from S401 to S406 in FIG. 4. In FIG. 5, time t51 is the time when the solenoid valve 110 is opened, time t52 is the time when the solenoid valve 108 is opened, time t53 is the time when the solenoid valve 108 is closed, and time t54 is the time when the solenoid valve 110 is closed.

Immediately after the time t51 when the solenoid valve 110 is opened, the pressure value measured by the pressure sensor 112 increases. Then, immediately after the time t52 when the solenoid valve 108 is opened, the pressure value measured by the pressure sensor 112 decreases, and pressure pulsation occurs due to a water hammer caused by the opening operation of the solenoid valve 108. Then, immediately after the time t53 when the solenoid valve 108 is closed, the pressure value measured by the pressure sensor 112 increases, and pressure pulsation occurs due to a water hammer caused by the closing operation of the solenoid valve 108. Then, immediately after the time t54 when the solenoid valve 110 is closed, the pressure value measured by the pressure sensor 112 decreases.

The water hammer immediately after the time t53 does not occur unless both the operation of opening and the operation of closing the solenoid valve 108 are successful. Therefore, it can be determined that the solenoid valve 108 has normally operated in a case where the amplitude of the pressure change due to the water hammer immediately after the time t53 is greater than or equal to a predetermined constant value.

In addition, in a case where the pressure between the time t52 and the time t53 is lower than the pressure between the time t51 and the time t52 and the pressure between the time t53 and the time t54, it can be determined that both the operation of opening and the operation of closing the solenoid valve 108 are successful, and the solenoid valve 108 has normally operated.

In the flowchart illustrated in FIG. 4, the control unit 100 acquires a pressure value from before the solenoid valve 110 is opened to after the solenoid valve is closed. In a case where it can be determined whether or not the solenoid valve 108 has normally operated only by the pressure value (change in pressure value) when the solenoid valve 108 is closed (S404), S401 can be set to the procedure after S403. That is, the control unit 100 can start acquisition of the pressure value measured by the pressure sensor 112 after opening the solenoid valve 108 and before closing the solenoid valve 108 (between S403 and S404) .

In a case where it is possible to determine whether or not the solenoid valve 108 has normally operated only by the pressure value after closing the solenoid valve 108, the procedure of S401 can be set to a procedure after S404. That is, the control unit 100 can start acquisition of the pressure value measured by the pressure sensor 112 after closing the solenoid valve 108.

As described above, the time required for processing the pressure data can be shortened by changing the timing to start the acquisition of the pressure value to shorten the time to acquire the pressure value.

In the flowchart illustrated in FIG. 4, in a case where the solenoid valve 108 has not normally operated, the control unit 100 executes the processing of stopping the subsequent pipetting operation of the automated analysis device (S408). The content of the processing in S408 is desirably determined in consideration of the risk when the solenoid valve 108 fails. For example, in a case where it is considered that a failure of the solenoid valve 108 causes a serious influence on the automated analysis device due to a water leak or the like, it is desirable to promptly stop the operation of the automated analysis device in S408.

### <Solenoid valve 118>

Next, a configuration for detecting that the solenoid valve 118 has normally operated in the automated analysis device according to the present embodiment will be described. As illustrated in FIG. 1, the solenoid valve 118 is placed in a flow path connecting the detection reagent bottle 117 and the branch block 116. The pump 119 is placed in a flow path on the downstream side of the branch block 116, and the discharge nozzle 120 is connected thereto.

Unlike the solenoid valve 110 and the solenoid valve 108, the solenoid valve 118 cannot detect whether or not it has normally operated based on the pressure value measured by the pressure sensor 112. Whether or not the solenoid valve 118 has normally operated can be detected based on the volume of the discharged detection reagent obtained by opening and closing the solenoid valve 118, and discharging the detection reagent in the detection reagent bottle 117 from the discharge nozzle 120 into the reagent cup 121. Since the dimensions of the reagent cup 121 are known, the volume of the detection reagent discharged into the reagent cup 121 can be obtained by detecting the position of the liquid level of the detection reagent with the liquid level detection element 103c. That is, it can be detected whether or not the solenoid valve 118 has normally operated by opening and closing the solenoid valve 118 and detecting the position of the liquid level of the detection reagent discharged into the reagent cup 121.

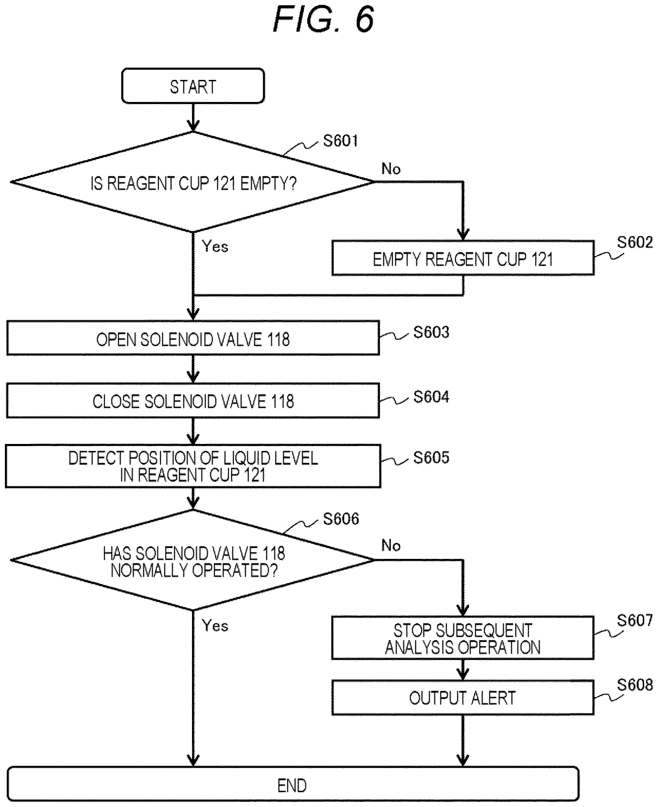

FIG. 6 is a flowchart illustrating a procedure for detecting that the solenoid valve 118 has normally operated.

In S601, it is checked whether the reagent cup 121 is empty. It can be determined whether or not the reagent cup 121 is empty by using, for example, the liquid level detection element 103c. In a case where the liquid level detection element 103c detects the liquid level of the liquid in the reagent cup 121, it can be determined that the reagent cup 121 is not empty, and the processing of S602 is performed. In a case where the liquid level detection element 103c does not detect the liquid level of the liquid in the reagent cup 121, it can be determined that the reagent cup 121 is empty, and the processing of S603 is performed.

In S602, the reagent cup 121 is emptied. For example, the detection syringe 114 aspirates the liquid in the reagent cup 121 with the reaction liquid aspiration nozzle 103a, so that the reagent cup 121 can be emptied.

The reason why the processing of S601 and S602 is performed is that if the reagent cup 121 is empty, the volume of the detection reagent discharged into the reagent cup 121 in the subsequent steps can be correctly measured.

In S603, the solenoid valve 118 is opened. When the solenoid valve 118 is opened, the detection reagent in the detection reagent bottle 117 is discharged from the discharge nozzle 120 into the reagent cup 121.

In S604, the solenoid valve 118 is opened for a predetermined constant time, and then the solenoid valve 118 is closed. By the processing of S603 and S604, the detection reagent is discharged into the reagent cup 121 by a predetermined constant volume.

In S605, the liquid level detection element 103c detects the position of the liquid level of the liquid in the reagent cup 121. By this processing, the volume of the detection reagent discharged into the reagent cup 121 is measured.

In S606, it is determined whether or not the solenoid valve 118 has normally operated from the position of the liquid level of the liquid in the reagent cup 121. In a case where the solenoid valve 118 has normally operated, the processing of the flowchart of FIG. 6 ends.

S607 and S608 are processing when the solenoid valve 118 has not normally operated. In S607, the subsequent analysis operation of the automated analysis device is stopped. In S608, an alert indicating that the solenoid valve 118 is not operating normally is output.

An example of a specific determination criterion when the control unit 100 determines whether or not the solenoid valve 118 has normally operated in S606 will be described below.

In a case where the solenoid valve 118 has not normally operated and the solenoid valve 118 does not open, the position of the liquid level of the liquid in the reagent cup 121 is lower than the position when the solenoid valve 118 has normally operated. Therefore, it is possible to use a determination criterion of determining that the solenoid valve 118 has not normally operated in a case where the position of the liquid level detected in the processing of S605 is lower than the predetermined position (and in a case where the liquid level detection element 103c does not detect the liquid level of the liquid in the reagent cup 121 in the processing of S605) .

In a case where the solenoid valve 118 has not normally operated and the solenoid valve 118 does not close, the position of the liquid level of the liquid in the reagent cup 121 is higher than the position when the solenoid valve 118 has normally operated. Therefore, it is possible to use a determination criterion of determining that the solenoid valve 118 has not normally operated in a case where the position of the liquid level detected in the processing of S605 is higher than the predetermined position.

In addition, by combining these two determination criteria, it is possible to use a determination criterion of determining that the solenoid valve 118 has normally operated in a case where the position of the liquid level detected in the processing of S605 is within the predetermined range.

The processing of S601 and S602 is performed in order to correctly measure the volume of the detection reagent discharged into the reagent cup 121 by opening the solenoid valve 118 in S603. Even if the reagent cup 121 is not emptied in the processing of S602, if the volume of the liquid present in the reagent cup 121 is known before the processing of S603, the volume of the detection reagent discharged into the reagent cup 121 in the subsequent step can be correctly measured.

Therefore, the processing of S601 and S602 can be replaced with processing of detecting the position of the liquid level of the liquid in the reagent cup 121 by the liquid level detection element 103c. It is possible to correctly measure the volume of the detection reagent discharged into the reagent cup 121 by obtaining the difference in the position of the liquid level before and after opening and closing the solenoid valve 118. In a case where the processing of S601 and S602 is replaced with processing of detecting the position of the liquid level of the liquid in the reagent cup 121, the empty volume of the reagent cup 121 may be insufficient. Therefore, in a case where the position of the detected liquid level is above the predetermined position, it is also possible to add a processing of reducing the amount of liquid in the reagent cup 121.

### <Solenoid valve 115>

Next, a configuration for detecting that the solenoid valve 115 has normally operated in the automated analysis device according to the present embodiment will be described. As illustrated in FIG. 1, the solenoid valve 115 is placed in a flow path connecting the branch block 107 and the branch block 116. The pump 119 is placed in a flow path on the downstream side of the branch block 116, and the discharge nozzle 120 is connected thereto.

The flow path in which the solenoid valve 115 is placed is a flow path having a smaller flow rate than that of the flow path in which the solenoid valve 108 is placed in a case where the solenoid valves 115 and 108 placed in the respective flow paths are opened. For this reason, as in the procedure for detecting that the solenoid valve 108 has normally operated (FIG. 4), it is not possible to detect whether or not the solenoid valve 115 has normally operated based on the pressure value measured by the pressure sensor 112. However, it can be detected whether or not the solenoid valve 115 has normally operated by opening and closing the solenoid valve 115, discharging the cleaning liquid in the tank 104 from the discharge nozzle 120 into the reagent cup 121, and detecting the position (volume) of the liquid level of the discharged cleaning liquid by the liquid level detection element 103c, similarly to the solenoid valve 118.

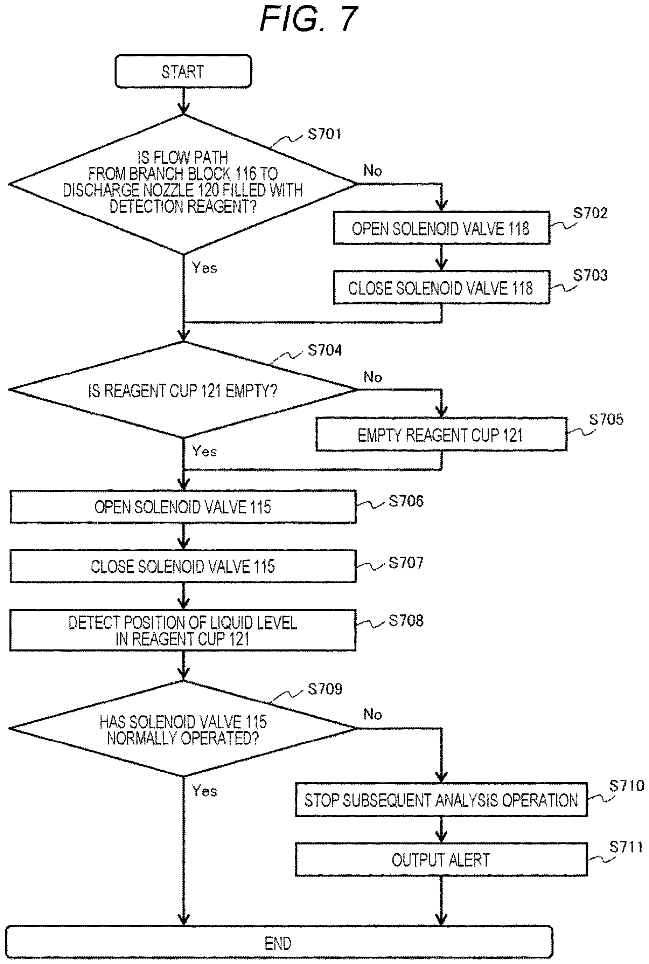

FIG. 7 is a flowchart illustrating a procedure for detecting that the solenoid valve 115 has normally operated. FIG. 7 illustrates, as an example, a flowchart of a procedure for detecting that the solenoid valve 115 has normally operated in a case where the liquid level detection element 103c can detect the liquid level of the detection reagent in the detection reagent bottle 117 but it is difficult to detect the liquid level of the cleaning liquid in the tank 104.

In a case where the liquid level detection element 103c is constituted by an element that detects the liquid level by a change in capacitance, it may be difficult to detect the liquid level depending on the liquid in the reagent cup 121. Specifically, the ease of detection of the liquid level may vary depending on the difference in physical property values such as relative permittivity and conductivity of the liquid. The flowchart of FIG. 7 shows a procedure for detecting that the solenoid valve 115 has normally operated using the liquid level detection element 103c in which it is difficult to detect the liquid level for the cleaning liquid in the tank 104.

In step S701, it is checked whether or not the flow path from the branch block 116 to the discharge nozzle 120 is filled with the detection reagent. In a case where the flow path is not filled with the detection reagent, the processing of S702 and S703 are performed. In a case where the flow path is filled with the detection reagent, the processing of S704 is performed.

The control unit 100 determines whether or not the flow path from the branch block 116 to the discharge nozzle 120 is filled with the detection reagent based on the history of the operation of the automated analysis device. For example, it is determined that the flow path from the branch block 116 to the discharge nozzle 120 is filled with the detection reagent if nothing is discharged from the discharge nozzle 120 after the solenoid valve 118 is opened and the detection reagent is discharged from the discharge nozzle 120.

In S702, the solenoid valve 118 is opened. When the solenoid valve 118 is opened, the detection reagent in the detection reagent bottle 117 is discharged from the discharge nozzle 120.

In S703, the solenoid valve 118 is opened for a predetermined constant time, and then the solenoid valve 118 is closed. By the processing of S702 and S703, the flow path from the branch block 116 to the discharge nozzle 120 is filled with the detection reagent.

In S704, it is checked whether the reagent cup 121 is empty. In a case where the reagent cup 121 is not empty, the processing of S705 is performed. In a case where the reagent cup 121 is empty, the processing of S706 is performed. The processing of S704 can be performed similarly to the processing of S601 of FIG. 6.

In S705, the reagent cup 121 is emptied. The processing of S705 can be performed similarly to the processing of S602 of FIG. 6.

The reason why the processing of S704 and S705 is performed is that if the reagent cup 121 is empty, the volume of the detection reagent discharged into the reagent cup 121 can be correctly measured in the subsequent steps.

In S706, the solenoid valve 115 is opened. In a case where the solenoid valve 115 is opened, the cleaning liquid in the tank 104 is discharged from the discharge nozzle 120 into the reagent cup 121.

In S707, the solenoid valve 115 is opened for a predetermined constant time, and then the solenoid valve 115 is closed. By the processing of S706 and S707, the cleaning liquid in the tank 104 is discharged into the reagent cup 121 by a predetermined constant volume. Since the flow path from the branch block 116 to the discharge nozzle 120 is filled with the detection reagent by the processing of S701 to S703, the cleaning liquid in the tank 104 and the detection reagent in the detection reagent bottle 117 are mixed in the reagent cup 121.

In S708, the liquid level detection element 103c detects the position of the liquid level of the liquid in the reagent cup 121. It is difficult for the liquid level detection element 103c to detect the liquid level of the cleaning liquid in the tank 104. However, since the liquid level detection element 103c detects the position of the liquid level of the mixed liquid of the cleaning liquid and the detection reagent in the processing of S708, it is possible to detect the position of the liquid level of the liquid in the reagent cup 121.

In S709, it is determined whether or not the solenoid valve 115 has normally operated from the position of the liquid level of the liquid in the reagent cup 121. In a case where the solenoid valve 115 has normally operated, the processing of the flowchart of FIG. 7 ends.

S710 and S711 are processing when the solenoid valve 115 has not normally operated. In S710, the subsequent analysis operation of the automated analysis device is stopped. In S711, an alert indicating that the solenoid valve 115 is not operating normally is output.

The similar determination criterion to the processing in S606 of FIG. 6 can be applied as a determination criterion for determining whether or not the solenoid valve 115 has normally operated in S709. That is, in a case where the position of the liquid level detected in the processing of S708 is lower than the predetermined position, the control unit 100 can determine that the solenoid valve 115 has not normally operated. Alternatively, the control unit 100 can determine that the solenoid valve 115 has not normally operated in a case where the position of the liquid level detected in the processing of S708 is higher than the predetermined position. Alternatively, the control unit 100 can determine that the solenoid valve 115 has normally operated in a case where the position of the liquid level detected in the processing of S708 is within a predetermined range.

However, since the position of the liquid level of the mixed liquid of the cleaning liquid and the detection reagent is detected in the processing of S708, the predetermined position and the predetermined range of the liquid level used for the above determination criterion need to be determined in consideration of the volume of the detection reagent filling the flow path from the branch block 116 to the discharge nozzle 120. The volume of the detection reagent can be obtained in advance from the specifications of the automated analysis device such as the volume of the flow path.

In addition, similar to the description of FIG. 6, even if the reagent cup 121 is not emptied in the processing of S705, if the volume of the liquid present in the reagent cup 121 is known before the processing of S706, the volume of the cleaning liquid in the tank 104 discharged into the reagent cup 121 can be correctly measured in the subsequent steps. That is, similarly to the processing of S601 and S602 of FIG. 6, the processing of S704 and S705 can be replaced with the processing of detecting the position of the liquid level of the liquid in the reagent cup 121 by the liquid level detection element 103c.

### <Solenoid valve 123>

Next, a configuration for detecting that the solenoid valve 123 has normally operated in the automated analysis device according to the present embodiment will be described. As shown in FIG. 1, the solenoid valve 123 is placed in the flow path connecting the tank 105 storing the cleaning liquid and the discharge nozzle 124.

Since the flow path in which the solenoid valve 123 is placed is not connected to the flow path in which the pressure sensor 112 is placed, it is not possible to detect whether or not the solenoid valve 123 has normally operated based on the pressure value measured by the pressure sensor 112. However, it can be detected whether or not the solenoid valve 123 has normally operated by opening and closing the solenoid valve 123, discharging the cleaning liquid in the tank 105 into the reagent cup 121 by the discharge nozzle 124, and detecting the position (volume) of the liquid level of the discharged cleaning liquid by the liquid level detection element 103c, similarly to the solenoid valve 118 and the solenoid valve 115.

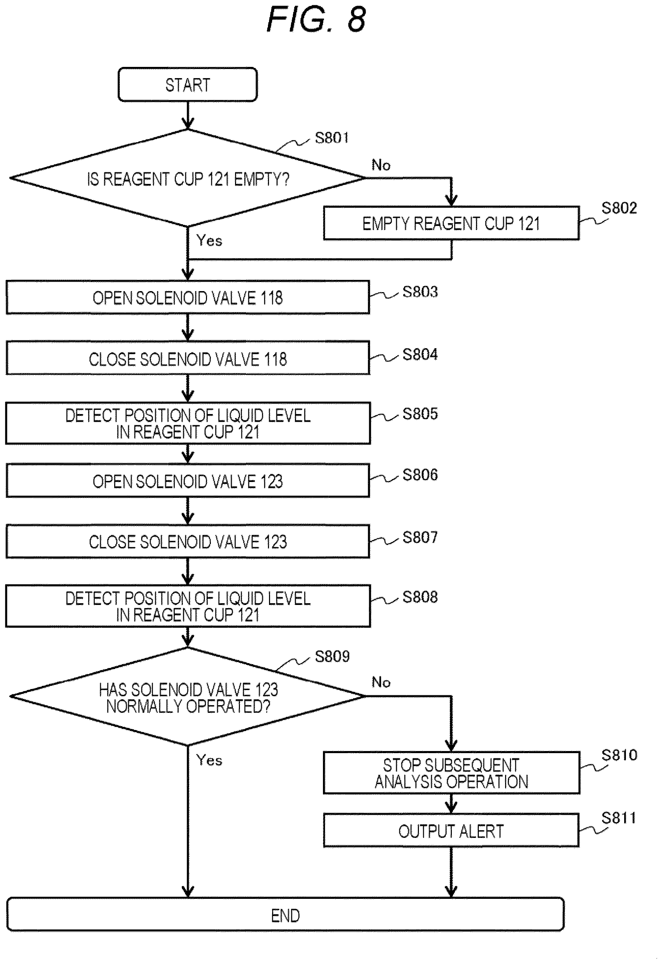

FIG. 8 is a flowchart illustrating a procedure for detecting that the solenoid valve 123 has normally operated. As an example, similarly to FIG. 7, FIG. 8 shows a flowchart of a procedure for detecting that the solenoid valve 123 has normally operated in a case where the liquid level detection element 103c is an element that detects a liquid level by a change in capacitance, and it is possible to detect the liquid level of the detection reagent in the detection reagent bottle 117, but it is difficult to detect the liquid level of the cleaning liquid in the tank 105.

In S801, it is checked whether the reagent cup 121 is empty. In a case where the reagent cup 121 is not empty, the processing of S802 is performed. In a case where the reagent cup 121 is empty, the processing of S803 is performed. The processing of S801 can be performed similarly to the processing of S601 of FIG. 6.

In S802, the reagent cup 121 is emptied. The processing of S802 can be performed similarly to the processing of S602 of FIG. 6.

The reason why the processing of S801 and S802 is performed is that if the reagent cup 121 is empty, the volume of the detection reagent discharged into the reagent cup 121 can be correctly measured in the subsequent steps.

In S803, the solenoid valve 118 is opened. When the solenoid valve 118 is opened, the detection reagent in the detection reagent bottle 117 is discharged from the discharge nozzle 120 into the reagent cup 121.

In S804, the solenoid valve 118 is opened for a predetermined constant time, and then the solenoid valve 118 is closed. By the processing of S803 and S804, a predetermined constant volume of the detection reagent is filled in the reagent cup 121.

In S805, the liquid level detection element 103c detects the position of the liquid level of the liquid in the reagent cup 121.

In S806, the solenoid valve 123 is opened. In a case where the solenoid valve 123 is opened, the cleaning liquid in the tank 105 is discharged from the discharge nozzle 124 into the reagent cup 121.

In S807, the solenoid valve 123 is opened for a predetermined constant time, and then the solenoid valve 123 is closed. By the processing of S806 and S807, the cleaning liquid in the tank 105 is discharged into the reagent cup 121 by a predetermined constant volume. By the processing from S803 to S804 and the processing from S806 to S807, the cleaning liquid in the tank 105 and the detection reagent in the detection reagent bottle 117 are mixed in the reagent cup 121.

In S808, the liquid level detection element 103c detects the position of the liquid level of the liquid in the reagent cup 121 again. It is difficult for the liquid level detection element 103c to detect the liquid level of the cleaning liquid in the tank 105. However, since the liquid level detection element 103c detects the position of the liquid level of the mixed liquid of the cleaning liquid and the detection reagent in the processing of S808, it is possible to detect the position of the liquid level of the liquid in the reagent cup 121.

In S809, it is determined whether or not the solenoid valve 123 has normally operated from the position of the liquid level of the liquid in the reagent cup 121. In a case where the solenoid valve 123 has normally operated, the processing of the flowchart of FIG. 8 ends.

S810 and S811 are processing in a case where the solenoid valve 123 has not normally operated. In S810, the subsequent analysis operation of the automated analysis device is stopped. In S811, an alert indicating that the solenoid valve 123 is not operating normally is output.

It is possible to use a determination criterion of determining that the solenoid valve 123 has normally operated in a case where the difference between the positions of the liquid level detected in the processing of S805 and the processing of S808 is within a predetermined range as a determination criterion for the control unit 100 determining whether or not the solenoid valve 123 has normally operated in S809. Alternatively, it is possible to use a determination criterion of determining that the solenoid valve 123 has not normally operated in a case where the difference between these positions of the liquid level is equal to or less than a predetermined value. Alternatively, it is possible to use a determination criterion of determining that the solenoid valve 123 has not normally operated in a case where the difference between the positions of the liquid level is a predetermined value or more.

In the processing in the flowchart shown in FIG. 8, the volume of the cleaning liquid in the tank 105 discharged into the reagent cup 121 can be obtained from the difference between the positions of the liquid level detected in the processing of S805 and the processing of S808. Therefore, in a case where there is a sufficient empty capacity in the reagent cup 121 and the liquid (mixed liquid) does not overflow from the reagent cup 121 even if the cleaning liquid in the tank 105 is discharged into the reagent cup 121 in S806, the processing of S801 and S802 can be omitted.

### <Solenoid valve 113>

Next, a configuration for detecting that the solenoid valve 113 has normally operated in the automated analysis device according to the present embodiment will be described. As illustrated in FIG. 1, the solenoid valve 113 is placed in the flow path connecting the branch block 107 and the detection unit 103. The detection syringe 114 is placed between the solenoid valve 113 and the detection unit 103.

The flow path in which the solenoid valve 113 is placed is a flow path having a smaller flow rate than that of the flow path in which the solenoid valve 108 is placed in a case where the solenoid valves 113 and 108 placed in the respective flow paths are opened. For this reason, as in the procedure for detecting that the solenoid valve 108 has normally operated (FIG. 4), it is not possible to detect whether or not the solenoid valve 113 has normally operated based on the pressure value measured by the pressure sensor 112. However, since the flow path in which the solenoid valve 113 is placed is connected to the detection unit 103, it is possible to detect whether or not the solenoid valve 113 has normally operated based on the detection result of the reaction liquid in the detection unit 103.

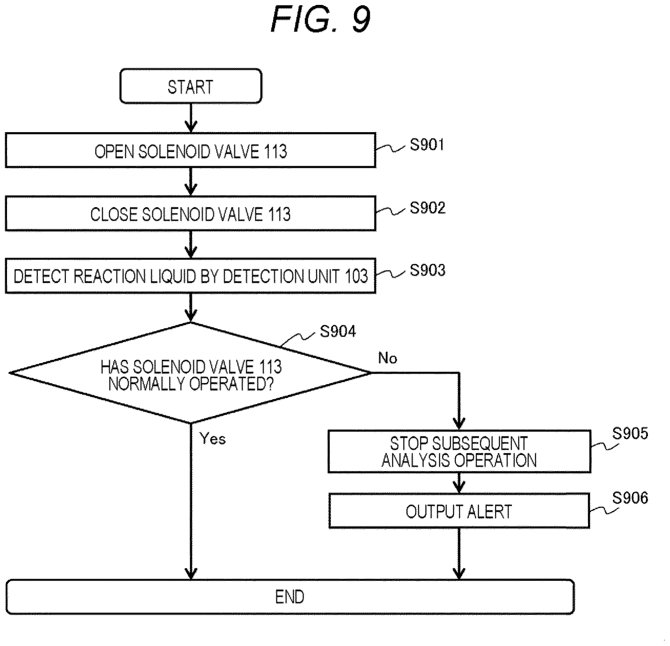

FIG. 9 is a flowchart illustrating a procedure for detecting that the solenoid valve 113 has normally operated.

In S901, the solenoid valve 113 is opened. As a result, the cleaning liquid in the tank 104 is fed to clean the inside of the flow path.

In S902, the solenoid valve 113 is opened for a predetermined constant time, and then the solenoid valve 113 is closed. After the solenoid valve 113 is closed, the detection syringe 114 aspirates the reaction liquid from the reaction container 102 by the reaction liquid aspiration nozzle 103a, and feeds the aspirated reaction liquid to the detection unit 103.

In S903, the detection unit 103 detects the reaction liquid. In a case where the reaction liquid is fed from the detection syringe 114, the detection unit 103 can detect the reaction liquid.

In S904, it is determined whether or not the solenoid valve 113 has normally operated based on the detection result of the reaction liquid in the detection unit 103. In a case where the detection unit 103 can detect the reaction liquid fed from the detection syringe 114 and analyze the reaction liquid, the detection unit can determine that the solenoid valve 113 has normally operated. In a case where the solenoid valve 113 has normally operated, the processing of the flowchart of FIG. 9 ends.

S905 and S906 are processing when the solenoid valve 113 has not normally operated. In S905, the subsequent pipetting operation of the automated analysis device is stopped. In S906, an alert indicating that the solenoid valve 113 is not operating normally is output.

An example of a specific determination criterion in a case where the control unit 100 determines whether or not the solenoid valve 113 has normally operated in S904 will be described below. In a case where the solenoid valve 113 is not normally operated and is not closed as specified when the solenoid valve 113 is opened and closed in S901 and S902, the detection syringe 114 cannot aspirate the reaction liquid from the reaction container 102 and cannot feed the reaction liquid to the detection unit 103. In this case, the detection unit 103 cannot detect the reaction liquid fed from the detection syringe 114 or cannot sufficiently analyze the reaction liquid. In a case where the solenoid valve 113 has not normally operated and is not opened as specified when the solenoid valve 113 is opened and closed in S901 and S902, the step of feeding the cleaning liquid in the tank 104 to clean the flow path (performed in S901 and S902) becomes insufficient. In this case, the reaction liquid cannot be sufficiently analyzed in the detection unit 103.

Therefore, in S904, the control unit 100 determines whether or not the solenoid valve 113 has normally operated based on the detection result of the detection unit 103 detecting the reaction liquid in S903. For example, it is possible to use a determination criterion of determining that the solenoid valve 113 has normally operated in a case where the measurement value (for example, absorbance and luminescence amount) obtained by measuring the reaction liquid by the detection unit 103 in S903 is within a predetermined range. Alternatively, it is possible to use a determination criterion of determining that the solenoid valve 113 has not normally operated in a case where the measured value is equal to or less than a predetermined value. Alternatively, it is possible to use a determination criterion of determining that the solenoid valve 113 has not normally operated in a case where the measured value is greater than or equal to a predetermined value.

As described above, in the automated analysis device according to the present embodiment, it is determined whether or not the solenoid valve 110, the solenoid valve 108, the solenoid valve 118, the solenoid valve 115, the solenoid valve 123, and the solenoid valve 113 normally operate using different procedures from one another. Information to be used for determining whether or not the solenoid valve normally operates is different between the solenoid valves. Hereinafter, an example of a method for determining which information should be used for determination with respect to a solenoid valve for which whether or not the operation is normal is to be determined.

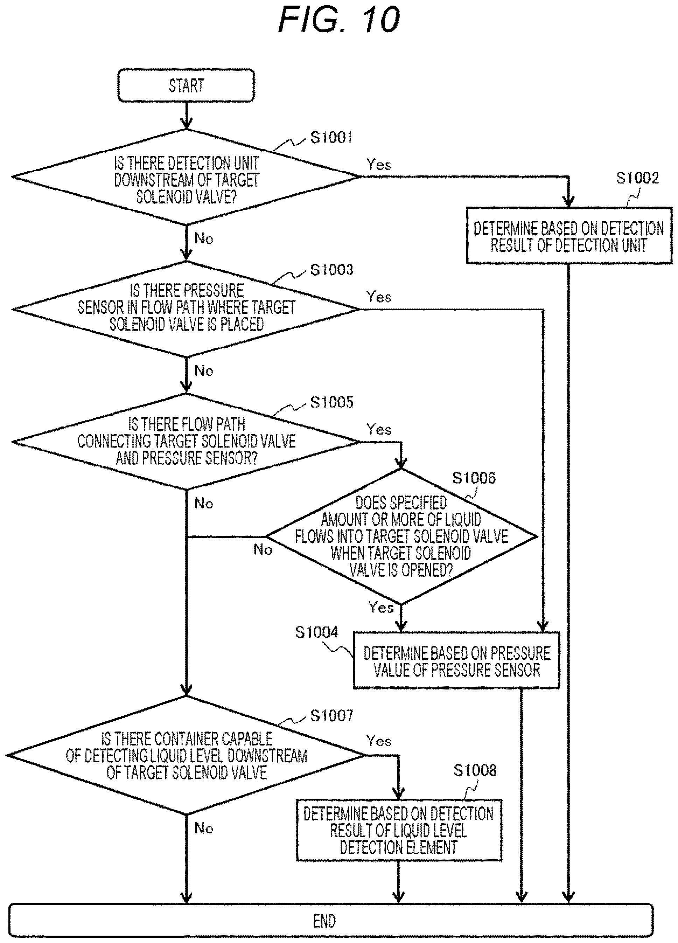

FIG. 10 is a flowchart illustrating an example of a method of determining which information should be used to determine whether or not the solenoid valve has normally operated. The procedure of the flowchart illustrated in FIG. 10 is executed by a designer who designs an automated analysis device. The designer uses the flowchart illustrated in FIG. 10 to determine which information should be used for the solenoid valve for which whether or not the operation is normal is to be determined. Hereinafter, the solenoid valve for which whether or not the operation is normal is to be determined is referred to as a "target solenoid valve".

In S1001, it is checked whether or not the detection unit 103 is connected downstream of the target solenoid valve. In a case where the detection unit 103 is connected to the downstream of the target solenoid valve, the procedure of S1002 is executed. In a case where the connection is not established, the procedure of S1003 is executed.

In S1002, it is determined whether or not the target solenoid valve has normally operated based on the detection result of the reaction liquid in the detection unit 103. In the present embodiment, only the solenoid valve 113 is a solenoid valve to which the detection unit 103 is connected downstream. That is, in a case where the target solenoid valve is the solenoid valve 113, the designer determines that the determination is made based on the detection result of the reaction liquid in the detection unit 103 (FIG. 9).

In many cases, for the solenoid valve to which the detection unit 103 is connected downstream, it is possible to determine whether or not the operation is normal based on the detection result of the reaction liquid in the detection unit 103. In addition, since the processing of detecting by the detection unit 103 after opening and closing the target solenoid valve (the process corresponding to S901 to S903 in FIG. 9) is often included in the normal analysis operation, for the solenoid valve to which the detection unit 103 is connected downstream, it is possible to determine whether or not the solenoid valve has normally operated within the normal analysis operation.

In S1003, it is checked whether or not the pressure sensor 112 is placed in the flow path in which the target solenoid valve is placed. In a case where the pressure sensor 112 is placed upstream or downstream of the target solenoid valve in the flow path in which the target solenoid valve is placed, the procedure of S1004 is executed. If not placed, the procedure of S1005 is executed.

In S1004, it is determined whether or not the target solenoid valve has normally operated based on the pressure value measured by the pressure sensor 112. In the present embodiment, only the solenoid valve 110 is a solenoid valve in which the pressure sensor 112 is placed in the flow path in which the solenoid valve 110 is placed. That is, in a case where the target solenoid valve is the solenoid valve 110, the designer determines that the determination is made based on the pressure value measured by the pressure sensor 112 (FIG. 2).

In S1005, it is checked whether or not there is a flow path connecting the target solenoid valve and the pressure sensor 112. In a case where there is a flow path connecting the target solenoid valve and the pressure sensor 112, the procedure of S1006 is executed. In a case where there is no flow path connecting them, the procedure of S1007 is executed. In the present embodiment, the solenoid valve 108, the solenoid valve 115, and the solenoid valve 118 are solenoid valves connected to a flow path connected to the pressure sensor 112.

In S1006, it is checked whether or not a predetermined specified amount or more of liquid flows into the target solenoid valve when the target solenoid valve is opened. In a case where liquid of a flow rate equal to or greater than the specified amount flows to the target solenoid valve when the target solenoid valve is opened, it is determined that the flow path in which the target solenoid valve is placed is a flow path having a large flow rate when the target solenoid valve is opened, and the procedure of S1004 is executed. In S1004, as described above, it is determined whether or not the target solenoid valve has normally operated based on the pressure value measured by the pressure sensor 112. In the present embodiment, only the solenoid valve 108 is a solenoid valve through which a liquid of a flow rate equal to or greater than the specified amount flows when the solenoid valve 108 is opened. That is, in a case where the target solenoid valve is the solenoid valve 108, the designer determines that the determination is made based on the pressure value measured by the pressure sensor 112 (FIG. 4).

In many cases, for the target solenoid valve (solenoid valve 110) in which it is determined that the pressure sensor 112 is placed in the flow path where the target solenoid valve is placed in S1003, and the target solenoid valve (solenoid valve 108) in which it is determined that the liquid having the flow rate equal to or higher than the specified amount flows when opened in S1006, it is possible to determine whether or not the target solenoid valve has normally operated based on the pressure value measured by the pressure sensor 112 in many cases. The determination using the measurement value of the pressure sensor 112 can be performed in a short time of one second or less. Therefore, in consideration of time efficiency, it is desirable to determine using the measurement value of the pressure sensor 112 for the solenoid valve for which it is possible to determine whether or not the solenoid valve has normally operated using the measurement value of the pressure sensor 112.

In S1007, it is checked whether or not the discharge nozzles 120 and 124 are placed downstream of the target solenoid valve and a container (reagent cup 121) capable of detecting the liquid level is disposed. In a case where the container capable of detecting the liquid level is disposed downstream of the target solenoid valve, the procedure of S1008 is executed.

In S1008, it is determined to determine whether or not the target solenoid valve has normally operated based on the detection result of the liquid level detection element 103c. The liquid level detection element 103c detects the position of the liquid level of the liquid discharged from the discharge nozzles 120 and 124 to the reagent cup 121. In the present embodiment, the solenoid valve 115, the solenoid valve 118, and the solenoid valve 123 are solenoid valves in which discharge nozzles 120 and 124 are placed downstream and the reagent cup 121 is disposed. That is, in a case where the target solenoid valves are the solenoid valve 115, the solenoid valve 118, and the solenoid valve 123, the designer determines that the determination is made based on the detection result of the liquid level detection element 103c (the position of the liquid level of the liquid discharged to the reagent cup 121) (FIGS. 7, 6, and 8).

In many cases, it is possible to determine whether or not the solenoid valve in which the discharge nozzles 120 and 124 are placed downstream and the reagent cup 121 is disposed has normally operated based on the detection result of the liquid level detection element 103c.

The flowchart illustrated in FIG. 10 illustrates an example of a method of determining which information is used for determining whether or not the solenoid valve has normally operated. The information used for determining whether or not the solenoid valve has normally operated is not limited to the information determined in the flowchart illustrated in FIG. 10. For example, in a case where the automated analysis device includes another detection element such as a vibration sensor or a camera, such a detection element can be utilized. In addition, in a case where it is considered that there is an adverse effect such as throughput loss in a case where determination is made by a certain detection element, it is desirable to utilize another detection element. Furthermore, a configuration in which an abnormality of not opening and an abnormality of not closing are detected by different detection elements is also effective for a certain solenoid valve.

As in the example illustrated in the flowchart of FIG. 10, the procedure for determining whether or not the solenoid valve has normally operated differs depending on the solenoid valve. It is desirable to determine at which timing to perform each procedure in consideration of both the time required for the procedure to be determined and the risk in a case where the solenoid valve fails. Hereinafter, an example of a method for determining a timing for performing a procedure for determining whether or not the solenoid valve has normally operated will be described.

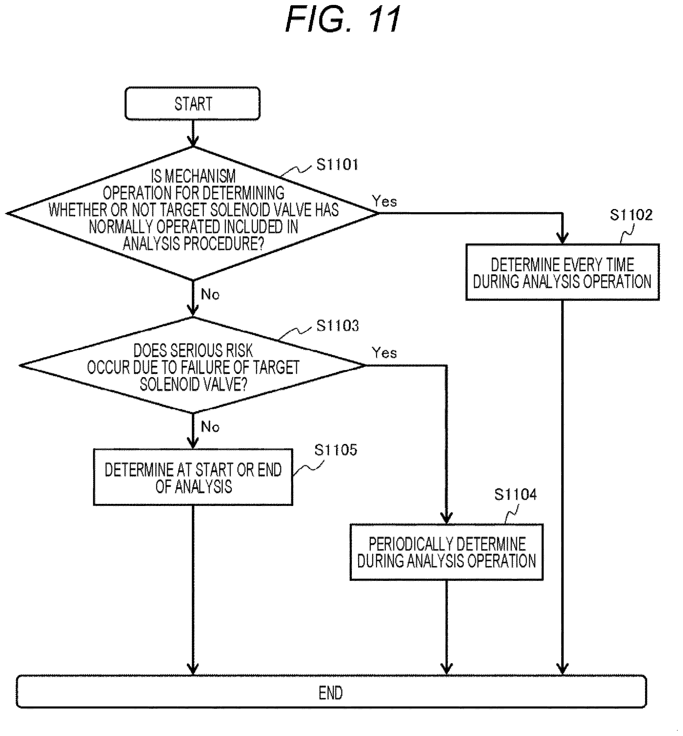

FIG. 11 is a flowchart illustrating an example of a method for determining a timing for performing a procedure for determining whether or not the solenoid valve has normally operated. The procedure of the flowchart illustrated in FIG. 11 is executed by a designer who designs an automated analysis device. The designer uses the flowchart illustrated in FIG. 11 to determine at which timing it should be determined that the target solenoid valve has normally operated.

In S1101, it is checked whether or not a mechanism operation for determining whether or not the target solenoid valve has normally operated is included in the analysis procedure of the automated analysis device. In a case where the mechanism operation is included in the analysis procedure of the automated analysis device, the procedure of S1102 is executed. If the mechanism operation is not included, the procedure of S1103 is executed.

The above mechanism operation is an operation in which a part of the components of the automated analysis device moves spatially, such as rotation of a motor or opening and closing of a solenoid valve, and includes, for example, an opening and closing operation of a solenoid valve, a liquid level detection operation, and a reaction liquid detection operation in the flowcharts of FIGS. 2 to 9. In the present embodiment, the mechanism operation for determining whether or not the solenoid valve 110 and the solenoid valve 113 have normally operated is included in the analysis procedure of the automated analysis device.

In S1102, it is determined whether or not the target solenoid valve has normally operated in each analysis operation during the analysis operation of the automated analysis device. The procedure of S1102 is a procedure in which no additional operation is to be added to the normal analysis operation. Specifically, in the present embodiment, since the processing from S201 to S204 in FIG. 2 and the processing from S901 to S903 in FIG. 9 are procedures included in the normal analysis operation, no additional mechanism operation is required to determine whether or not the target solenoid valve has normally operated. Therefore, in these procedures, it is possible to determine whether the target solenoid valve has normally operated without spending time other than the normal analysis operation.

In S1103, it is checked whether or not a serious risk occurs in the automated analysis device due to the failure of the target solenoid valve. Examples of serious risks can include safety-related risks, such as water leakage due to solenoid valve failure. In a case where a serious risk occurs, the procedure of S1104 is performed. If no serious risk occurs, the procedure of S1105 is performed.

In S1104, since a serious risk occurs in the automated analysis device due to the failure of the target solenoid valve, it is periodically determined whether or not the target solenoid valve has normally operated during the analysis operation of the automated analysis device. The periodic determination means that the determination is made not in every mechanical operation but in every predetermined period. In the present embodiment, there is no solenoid valve that causes a serious risk due to failure.

In S1105, since no serious risk occurs in the automated analysis device due to the failure of the target solenoid valve, it is determined whether or not the target solenoid valve has normally operated at the start or end of the analysis by the automated analysis device. In the present embodiment, the solenoid valves that do not cause a serious risk due to failure are the solenoid valve 108, the solenoid valve 115, the solenoid valve 118, and the solenoid valve 123.

According to the branching procedure of S1103, it is possible to check for the solenoid valve having a high risk caused by the failure whether or not the solenoid valve has operated normally at a high frequency (S1104), and check for the solenoid valve having a low risk caused by the failure whether or not the solenoid valve has operated normally at a low frequency (S1105). Therefore, the automated analysis device according to the present embodiment can effectively detect whether or not the solenoid valve has normally operated without reducing the throughput of analysis, and can improve reliability.

As described above, the automated analysis device according to the present embodiment can detect whether or not all of the plurality of solenoid valves included normally operate at low cost without attaching an additional detection element. Therefore, the automated analysis device according to the present embodiment can improve reliability.

### Second embodiment

An automated analysis device according to a second embodiment of the present invention will be described. In the following description, the description of the configuration common to the automated analysis device according to the first embodiment in the automated analysis device according to the second embodiment will be omitted.

In the first embodiment, the configuration for detecting whether or not the plurality of solenoid valves included in the automated analysis device normally operate has been described. When detecting whether or not the operation of the solenoid valve is normal, it is also possible to detect whether or not the pressure of the pump is normal.

Hereinafter, with respect to the automated analysis device according to the present embodiment, a procedure for detecting that the solenoid valve 123 has normally operated and detecting that the pressure of the pump 122 is normal will be described as an example. The procedure for detecting that the solenoid valve 123 has normally operated has been described in the first embodiment with reference to FIG. 8.

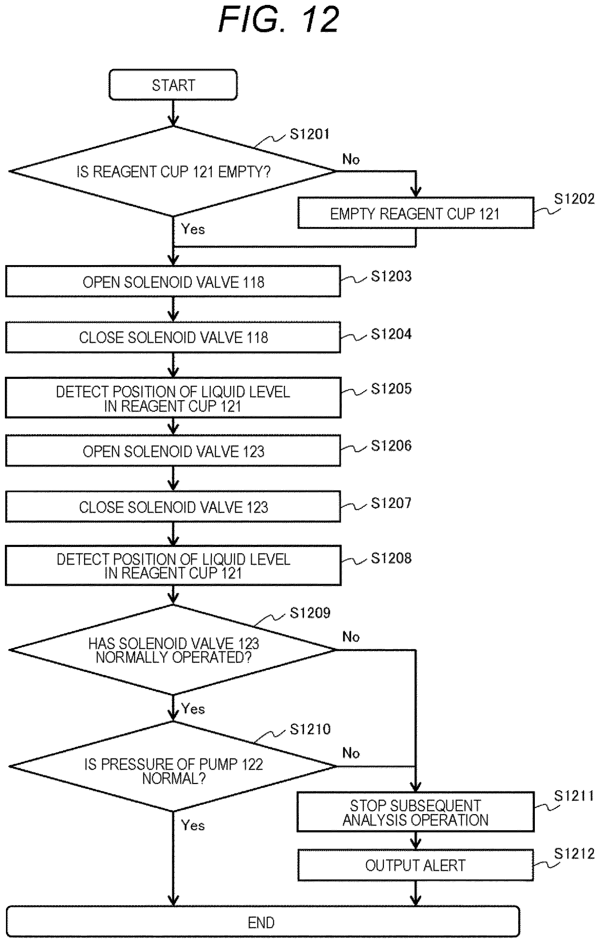

FIG. 12 is a flowchart illustrating a procedure for detecting that the solenoid valve 123 has normally operated and that the pressure of the pump 122 is normal in the automated analysis device according to the present embodiment. Note that the processing of the flowchart illustrated in FIG. 12 is executed by the control unit 100 unless otherwise specified.

In FIG. 12, the processing from S1201 to S1208 is the same as the processing from S801 to S808 in FIG. 8. The processing of determining whether or not the solenoid valve 123 has normally operated in S1209 is the same as the processing of S809 in FIG. 8. The processing in S1211 and S1212 is the same as the processing in S810 and S811 in FIG. 8.

In S1210, in a case where the solenoid valve 123 has normally operated, it is determined whether or not the pressure of the pump 122 is normal. In a case where the pressure of the pump 122 is normal, the processing of the flowchart of FIG. 12 ends. In a case where the pressure of the pump 122 is not normal, the processing of S1211 and S1212 are executed similarly to the case where the solenoid valve 123 has not normally operated in S1209.

An example of a determination criterion in a case where the control unit 100 determines whether or not the pressure of the pump 122 is normal in S1210 will be described below. In a case where the pressure of the pump 122 is normal, the amount of the cleaning liquid discharged in the processing of S1206 to S1207 of FIG. 12 falls within a predetermined range. In a case where the pressure of the pump 122 decreases, the amount of the cleaning liquid to be discharged decreases, and in a case where the pressure of the pump 122 increases, the amount of the cleaning liquid to be discharged increases. From this, it is possible to use a determination criterion of determining that the pressure of the pump 122 is normal in a case where the difference between the positions of the liquid level detected in the processing of S1205 and the processing of S1208 is within a predetermined range.

However, in a case where it can be determined that the pump 122 is normal if the pressure of the pump is equal to or higher than a certain value, it is possible to use a determination criterion of determining that the pressure of the pump 122 is normal in a case where the difference between the positions of the liquid level as described above is equal to or larger than a predetermined value. Alternatively, in a case where it can be determined that the pump 122 is normal if the pressure of the pump is equal to or less than a certain value, it is possible to use a determination criterion of determining that the pressure of the pump 122 is normal in a case where the difference between the positions of the liquid level as described above is equal to or less than a predetermined value.

The automated analysis device according to the present embodiment can detect whether or not the solenoid valve normally operates and whether or not the pressure of the pump is normal at low cost without attaching an additional detection element, and can improve reliability.

Note that the present invention is not limited to the above embodiments, and various modifications are possible. For example, the above-described embodiments have been described in detail in order to simply describe the present invention, and are not necessarily limited to those having all the described configurations. Further, a part of the configuration of one embodiment can be replaced with the configuration of another embodiment. In addition, the configuration of another embodiment can be added to the configuration of a certain embodiment. In addition, a part of the configuration of each embodiment can be deleted, or another configuration can be added or replaced.

### Reference Signs List

- 100: control unit
- 101: pipetting unit
- 101a: pipetting nozzle
- 101b: pipetting arm
- 102: reaction container
- 103: detection unit
- 103a: reaction liquid aspiration nozzle
- 103b: detection element
- 103c: liquid level detection element
- 104: tank
- 105: tank
- 106: pump
- 107: branch block
- 108: solenoid valve
- 109: pipetting nozzle cleaning tank
- 110: solenoid valve
- 111: pipetting syringe
- 112: pressure sensor
- 113: solenoid valve
- 114: detection syringe
- 115: solenoid valve
- 116: branch block
- 117: detection reagent bottle
- 118: solenoid valve
- 119: pump
- 120: discharge nozzle
- 121: reagent cup
- 122: pump
- 123: solenoid valve
- 124: discharge nozzle
- 125: cleaning tank
- t31: time when solenoid valve 110 is opened
- t32: time when solenoid valve 110 is closed
- t51: time when solenoid valve 110 is opened
- t52: time when solenoid valve 108 is opened
- t53: time when solenoid valve 108 is closed
- t54: time when solenoid valve 110 is closed

## Claims

1. An automated analysis device comprising:
a flow path which feeds liquid;
a plurality of fluid control valves which are placed in the flow path and switch between opening and closing of the flow path;
a pressure sensor which measures pressure in the flow path;
a liquid level detection element which detects a position of a liquid level of a liquid; and
a control unit,
wherein one or more of the fluid control valves act as a first fluid control valve connected to the pressure sensor through the flow path;
one or more of the fluid control valves act as a second fluid control valve connected to a discharge nozzle through the flow path;
the liquid level detection element detects a position of a liquid level of a liquid discharged from the discharge nozzle;
the control unit
detects whether or not the first fluid control valve has normally operated based on a value of the pressure measured by the pressure sensor, and
detects whether or not the second fluid control valve has normally operated based on a position of the liquid level detected by the liquid level detection element.

2. The automated analysis device according to claim 1, comprising two or more of the first fluid control valves,
wherein in a state where among the first fluid control valves one of the fluid control valves is opened, the control unit opens and closes another one of the fluid control valves, acquires a value of the pressure measured by the pressure sensor, and detects whether or not the other one of the fluid control valves has normally operated based on the acquired value of the pressure.

3. The automated analysis device according to claim 2, wherein in the flow path in which the other one of the fluid control valves among the first fluid control valves is placed, a flow rate when the other one of the fluid control valves is opened is larger than a predetermined value.

4. The automated analysis device according to claim 2, wherein the control unit detects whether or not the other one of the fluid control valves has normally operated based on an amplitude of a change in the pressure after the other one of the fluid control valves is opened and closed.

5. The automated analysis device according to claim 1, comprising two or more of the second fluid control valves,
wherein the liquid level detection element detects a position of the liquid level after one of the fluid control valves among the second fluid control valves is opened and closed, and then detects a position of the liquid level after another one of the fluid control valves among the second fluid control valves is opened and closed, and
the control unit detects whether or not the other one of the fluid control valves has normally operated based on a difference between the positions of the liquid level detected by the liquid level detection element.

6. The automated analysis device according to claim 5, wherein
the liquid discharged by opening and closing the one of the fluid control valves among the second fluid control valves and the liquid discharged by opening and closing the other one of the fluid control valves among the second fluid control valves are different from each other, and
the liquid level detection element detects a position of the liquid level of a mixed liquid of the liquids different from each other after the other one of the fluid control valves is opened and closed.

7. The automated analysis device according to claim 1, comprising a detection unit which analyzes a reaction liquid which is a mixed solution of a sample and a reagent,
wherein one or more of the fluid control valves act as a third fluid control valve connected to the detection unit through the flow path,
a syringe is connected to the flow path connecting the detection unit and the third fluid control valve,
the syringe aspirates the reaction liquid and feeds the reaction liquid to the detection unit, and
the control unit detects whether or not the third fluid control valve has normally operated based on a detection result of the reaction liquid by the detection unit.
